(19) Europäisches Patentamt / European Patent Office / Office européen des brevets

(11) **EP 3 715 752 A1**

(12) **EUROPÄISCHE PATENTANMELDUNG**

(43) Veröffentlichungstag:
**30.09.2020 Patentblatt 2020/40**

(51) Int Cl.:
*F25D 23/06* (2006.01)     *F16L 59/065* (2006.01)
*B32B 7/05* (2019.01)      *C09J 5/06* (2006.01)

(21) Anmeldenummer: **20165576.8**

(22) Anmeldetag: **25.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.03.2019 DE 102019107738**
**25.04.2019 DE 102019110751**

(71) Anmelder: **Liebherr-Hausgeräte Ochsenhausen GmbH**
**88416 Ochsenhausen (DE)**

(72) Erfinder:
• **Hiemeyer, Jochen**
  **97753 Karlstadt (DE)**
• **Kerstner, Martin**
  **97080 Würzburg (DE)**

(74) Vertreter: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **DECKSCHICHTVERBUND FÜR EINEN FOLIENUMHÜLLTEN VAKUUMDÄMMKÖRPER**

(57) Die vorliegende Erfindung betrifft einen Verbund mit einem Grundkörper und einer vorzugsweise metallischen Deckschicht, welche mittels einer Anzahl von Verbindungsstellen mit dem Grundkörper verbunden ist, wobei die Flächenausdehnung einer jeden Verbindungsstelle der Anzahl an Verbindungsstellen zumindest in einer Dimension kleiner ist als das 1,2-fache, insbesondere kleiner als das 0,6-fache, der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur. Weiterhin betrifft die Erfindung ein Verfahren zum Herstellen eines derartigen Verbundes.

EP 3 715 752 A1

**Beschreibung**

Moderne Kühl- und /oder Gefriergeräte weisen meist einen Vakuumdämmkörper auf, der einen temperierten Innenraum von der Umgebung abschirmt. Um dauerhaft das Vorliegen eines Vakuums in dem Vakuumdämmkörper gewährleisten und somit auch über längere Zeiträume eine zufriedenstellende Dämmwirkung bereitstellen zu können, ist der Vakuumdämmkörper meist mit einer Barrierefolie überzogen, die einen Gasaustausch zwischen dem Vakuum und der Umgebung unterbindet.

Bei der Herstellung eines Vakuumdämmkörpers für ein Kühl- und /oder Gefriergerät wird somit meist ein Verbund aus dem Vakuumdämmkörper und einer vorzugsweise metallische Deckschicht gebildet, welche mittels in mehreren Verbindungsstellen aufgetragenem Schmelzkleber mit dem Vakuumdämmkörper vorzugsweise durch Versiegeln / Siegeln verbunden wird.

Bei den eingesetzten Siegelvorgängen sind die Deckschicht sowie der Vakuumdämmkörper meist Druck und Erwärmung ausgesetzt. Aufgrund der unterschiedlichen Materialeigenschaften des Vakuumdämmkörpers und der Deckschicht bzw. Barrierefolie reagieren der Vakuumdämmkörper und die Deckschicht unterschiedlich auf derartige Umwelteinflüsse und es treten häufig unerwünschte Ausbauchungen der Deckschicht auf, welche das optische Erscheinungsbild des Verbunds aus Vakuumdämmkörper und Deckschicht verschlechtern.

Es ist die Aufgabe der vorliegenden Erfindung, die Nachteile des Stands der Technik zu beseitigen. Konkret liegt der vorliegenden Erfindung die Aufgabe zugrunde, einen Verbund sowie ein zugehöriges Verfahren bereitzustellen, bei dem die Problematik der Ausbauchungen der Deckschicht abgemildert oder auch ganz beseitigt ist.

Diese Aufgabe wird durch einen Verbund gemäß Anspruch 1 und ein Verfahren nach Anspruch 6 gelöst. Weitere vorteilhafte Weiterbildungen der Erfindung sind Gegenstand der Unteransprüche.

Ein erfindungsgemäßer Verbund hat einen Grundkörper und eine vorzugsweise metallische Deckschicht, welche mittels einer Anzahl von Verbindungsstellen mit dem Grundkörper verbunden ist, wobei die Flächenausdehnung einer jeden Verbindungsstelle der Anzahl an Verbindungsstellen zumindest in einer Dimension kleiner ist als das 1,2-fache, insbesondere kleiner als das 0,6-fache, der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur.

In anderen Worten besteht der Kerngedanke der vorliegenden Erfindung darin, die Verbindungsstellen zwischen dem Grundkörper, beispielsweise dem Vakuumdämmkörper, und der vorzugsweise metallischen Deckschicht derart in ihrer Ausgestaltung anzupassen, dass eine optimale Balance zwischen einer sicheren Verbindung der Deckschicht und des Grundkörpers im fertigen Verbund und einer möglichst geringen Verformung bzw. Deformation der metallischen Deckschicht während des Siegelvorgangs besteht.

Gemäß der vorliegenden Erfindung ist die Flächenausdehnung einer jeden Verbindungsstelle der Anzahl an Verbindungsstellen derart eingestellt, dass sie zumindest in einer Dimension (beispielsweise einem Durchmesser der Flächenausdehnung) kleiner ist als das 1,2-fache, insbesondere kleiner als das 0,6-fache, der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur.

In anderen Worten wird zunächst ein Referenzwert der Flächenausdehnung der Verbindungsstelle berechnet, und zwar aus der Stärke bzw. Dicke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur (siehe auch Gleichung 6, welche die Flächenausdehnung I wiedergibt). Der Referenzwert kann als maximale Flächenausdehnung einer einzelnen Klebestelle herangezogen werden.

In der Praxis hat es sich als vorteilhaft erwiesen, wenn die Flächenausdehnung einer jeden Verbindungsstelle der Anzahl an Verbindungsstellen in einer Dimension maximal 120 % (das 1,2-fache) und besonders bevorzugt maximal 60 % (das 0,6-fache) des berechneten Referenzwerts beträgt.

Besonders bevorzugt beträgt die Flächenausdehnung maximal 60 % (das 0,6-fache) des berechneten Referenzwerts und variiert zwischen ca. 10 % und ca. 60% des Referenzwerts, insbesondere zwischen ca. 20 % und ca. 60% des Refernzwerts, vorzugsweise zwischen ca. 20 % und ca. 30 % des Referenzwerts, vorteilhafterweise zwischen ca. 20 % und ca. 40 % des Referenzwerts.

Die Abmessung der einzelnen Verbindungsstellen variiert somit in Abhängigkeit von den Eigenschaften der eingesetzten Deckschicht (Stärke bzw. Dicke der Deckschicht, thermischer Ausdehnungskoeffizient der Deckschicht) und des eingesetzten Schmelzklebers (Temperaturdifferenz zwischen dem Schmelzpunkt des die Verbindungstelle bildenden Schmelzklebers und der Raumtemperatur). Die Raumtemperatur liegt bei ca. 20 ° Celsius.

In den Verbindungsstellen zwischen dem Grundkörper, beispielsweise dem Vakuumdämmkörper, und der vorzugsweise metallischen Deckschicht wird vorzugsweise ein Schmelzkleber aufgetragen, der während des Siegelns schmilzt und somit die Deckschicht stofflich mit dem Grundkörper verbindet.

Es hat sich weiterhin als vorteilhaft erwiesen, wenn bei dem Verbund die Flächenausdehnung einer jeden Verbindungsstelle kleiner ist als das 0,5-fache der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur.

In anderen Worten beträgt die die Flächenausdehnung einer jeden Verbindungsstelle der Anzahl an Verbindungsstellen in mindestens einer Dimension maximal ca. 60 % (das 0,6-fache) des berechneten Referenzwerts und liegt vorzugsweise zwischen ca. 20 % und ca. 60% des Referenzwerts (siehe hierzu auch Beispiel 1 und Beispiel 2).

Grundsätzlich kann lediglich eine Verbindungsstelle vorgesehen sein, es können jedoch auch mehrere Verbindungstellen in beliebiger Anzahl vorgesehen sein. Es können nur wenige Verbindungspunkte bzw. Verbindungsstellen vorgesehen sein, jedoch auch mehrere Verbindungsstellen in beliebiger Anzahl vorgesehen sein.

Zudem hat es sich als vorteilhaft herausgestellt, wenn bei einem erfindungsgemäßen Verbund die einzelnen Verbindungsstellen der Anzahl von Verbindungsstellen vorzugsweise ineinander übergehen und / oder einander überlappen und / oder somit eine flächige, vorzugsweise eine vollflächige, Verbindung zwischen der Deckschicht und dem Grundkörper ausbilden.

Bei einer derartigen Ausgestaltung kann eine besonders sichere und gleichmäßige Verbindung zwischen der Deckschicht und dem Grundkörper erreicht werden.

Es können allerdings auch Vakuumdämmelemente für andere Anwendungen, beispielsweise Wandelemente oder Warmwasserspeicher als Grundkörper Anwendung finden.

Vorzugsweise ist die Deckschicht aus Stahl und / oder Aluminium oder einem sonstigen Metall gefertigt.

Vorzugsweise ist der Grundkörper ein Vakuumdämmkörper für ein Kühl- und / oder Gefriergerät oder ein Vakuumdämmkörper eines Kühl- und / oder Gefriergeräts.

Ein anderer Aspekt der vorliegenden Erfindung betrifft ein Verfahren zum Herstellen eines Verbunds, welcher einen Grundkörper und eine vorzugsweise metallische Deckschicht aufweist, welche mittels einer Anzahl von Verbindungsstellen mit dem Grundkörper verbunden ist, mit dem Schritt: Ermitteln eines Referenzwerts der Flächenausdehnung mindestens einer Dimension einer jeden Verbindungsstelle der Anzahl von Verbindungsstellen, wobei der Referenzwert sich aus der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur berechnet (siehe auch Gleichung 6, welche die Flächenausdehnung I wiedergibt).

Vorzugsweise wird ein erfindungsgemäßes Verfahren zum Herstellen bzw. Beschichten eines Vakuumdämmkörpers für ein Kühl- und / oder Gefriergerät oder eines Vakuumdämmkörper eines Kühl- und / oder Gefriergeräts oder auch zum Herstellen eines Kühl- und / oder Gefriergeräts eingesetzt.

Vorzugsweise umfasst das Verfahren weiterhin den Schritt: Aufbringen einer Anzahl von Verbindungsstellen auf dem Grundkörper und / oder der vorzugsweise metallischen Deckschicht, wobei die Flächenausdehnung einer jeden Verbindungsstelle der Anzahl von Verbindungsstellen zumindest in einer Dimension kleiner ist als das 1,2-fache, insbesondere kleiner als das 0,6-fache des Referenzwerts. Hierbei beträgt die Flächenausdehnung weniger als 120% (das 1,2-fache) des Referenzwertes, vorzugsweise weniger als 60% des Referenzwertes.

Grundsätzlich kann lediglich eine Verbindungsstelle vorgesehen sein, es können jedoch auch mehrere Verbindungstellen in beliebiger Anzahl vorgesehen sein. Gründätzlich können alle Verbindungstelle dieselbe oder eine ähnliche Flächenausdehnung aufweisen oder unterschiedlich ausgestaltet sein.

In der Praxis hat es sich als vorteilhaft erwiesen, wenn eine jede Verbindungsstelle der Anzahl an Verbindungsstellen mit einer derartigen Flächenausdehnung auf die Deckschicht und / oder den Grundkörper aufgebracht wird, dass die Flächenausdehnung in mindestens einer Dimension weniger als 120 % (das 1,2-fache), vorzugsweise weniger als 60 % (das 0,6-fache) des berechneten Referenzwerts beträgt.

Hierbei beträgt die Flächenausdehnung weniger als 120 % (das 1,2-fache) des Refernzwerts, vorzugsweise ca. 60 % bis ca. 110 % des Referenzwerts, besonders bevorzugt ca. 70% bis ca. 100% des Referenzwerts, insbesondere ca. 80 % bis ca. 100% des Referenzwerts, besonders ca. 90 % bis ca. 100% berechneten Referenzwerts.

Besonders bevorzugt beträgt die Flächenausdehnung maximal 60% (das 0,6-fache) des berechneten Referenzwertes und liegt zwischen ca. 20% und ca. 60% des Referenzwertes

In einer vorteilhaften Ausgestaltung beträgt die Flächenausdehnung maximal ca. 60% des Referenzwerts (siehe Beispiele 1 und 2).

Zu kleine Verbindungstellen führen jedoch zu einem geringen Flächenanteil der Verklebung bzw. machen eine Vielzahl an Klebeprozessschritten notwendig. Außerdem wird bei kleinen Klebestellen die Wärmeableitung im Blech weg von der Klebestelle problematisch.

Vorzugsweise beträgt die Untergrenze der Flächenausdehnung somit ca. 10 % bis ca. 40 % des Referenzwerts, vorzugsweise ca. 20 % bis ca. 30% des Referenzwerts, besonders bevorzugt ca. 10% bis ca 30 % des Referenzwerts, insbesondere ca. 10% bis ca. 20 % des Referenzwerts.

Weiterhin hat es sich als in der Praxis als vorteilhaft erwiesen, wenn eine jede Verbindungsstelle der Anzahl an Verbindungsstellen punktförmig und / oder im Wesentlichen rund ausgebildet wird. In anderen Worten werden erfindungsgemäß die Deckschicht und der Grundkörper vorzugsweise über einzelne Klebepunkte miteinander verbunden.

Für eine optimale Verbindung zwischen dem Grundkörper und der Deckschicht spielt auch der Abstand zwischen den einzelnen Verbindungsstellen eine Rolle. Hierbei ist es besonders vorteilhaft, wenn eine jede Verbindungsstelle der Anzahl an Verbindungsstellen in einem derartigen Abstand von einer benachbarten Verbindungsstelle beabstandet angeordnet bzw. aufgebracht wird, dass mittels eines nachfolgenden Siegelschritts / Siegelvorgangs bzw. mehrerer nachfolgender Siegelschritte / Siegelvorgänge, die einzelnen Verbindungsstellen miteinander vorzugsweise zu einem Kontinuum verschmolzen werden können.

In einem derartigen Fall erfolgt das Versiegeln der Deckschicht und des Grundkörpers vorzugsweise mittels eines einmaligen Siegelvorgangs oder mittels mehrerer Siegelvorgänge derart, dass die einzelnen Verbindungsstellen der Anzahl von Verbindungsstellen miteinander verschmelzen und eine flächige, vorzugsweise eine vollflächige, Verbindung zwischen der Deckschicht und dem Grundkörper gebildet wird.

Diese Ausgestaltung bietet den Vorteil, dass die Deckschicht und der Grundkörper besonders gleichmäßig und sicher miteinander verbunden sind.

Vorzugsweise kommen bei einem erfindungsgemäßen Verfahren eine Deckschicht aus einem Metall, vorzugsweise aus Stahl und / oder Aluminium, und ein Grundkörper in Form eines Vakuumdämmkörpers für ein Kühl- und / oder Gefriergerät bzw. eines Kühl- und / oder Gefriergeräts zum Einsatz.

Weitere Vorteile, Merkmale und Effekte der vorliegenden Erfindung ergeben sich aus den Figuren 1 bis 3b. Hierbei zeigt:

Fig. 1 die Ausbauchung eines in einer Testvorrichtung eingespannten Blechs bei Erwärmung eines Teilbereichs des Blechs;

Fig. 2 die Stauchung und Spreizung eines Blechs abseits der Nullfaser;

Fig. 3a beispielhaft die Ausbauchung eines Blechs mit einer Stärke von 0,5 mm, bei dem ein Teilbereich mit einer Länge von 30 mm erwärmt wird; und

Fig. 3b die Ausbauchung des Blechs aus Fig. 3a, wenn ein Teilbereich mit einer Länge von 10 mm erwärmt wird.

In den Figuren und der zugehörigen Beschreibung werden die Begriffe neutrale Faser / neutrale Phase und Nullfaser / Nullphase synonym verwendet.

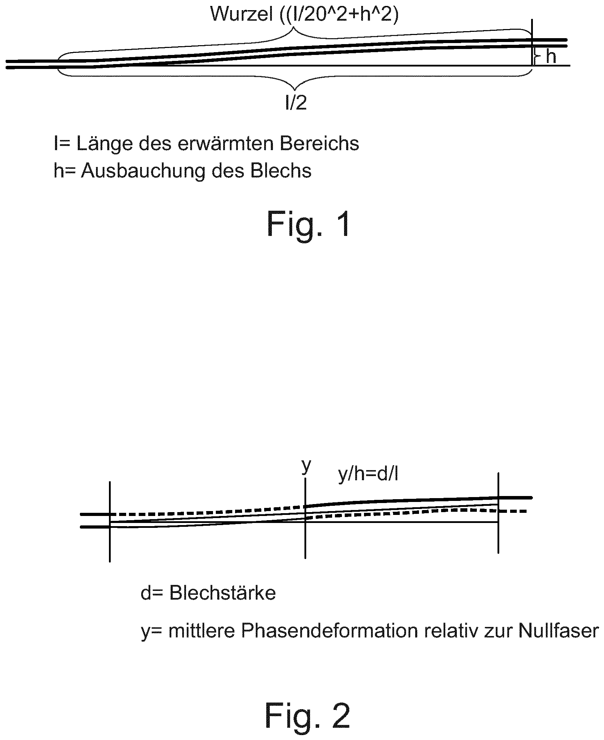

Figur 1 zeigt beispielhaft, wie sich ein in einer Testvorrichtung eingespanntes Blech ausdehnt, wenn ein Teilbereich des Blechs erwärmt wird. Das in dem Versuchsaufbau von Fig. 1 verwendete Blech ist sehr dünn (beispielsweise 0, 5 mm Stärke / Dicke und entspricht in seinem Verhalten somit weitgehend der Nullfaser).

Wie aus Fig. 1 hervorgeht, entspricht die thermische Ausdehnung $\alpha\Delta T$ dem in Gleichung 1 wiedergegebenen Term. Die Länge l entspricht hierbei der Länge eines erwärmten Teilbereichs des Blechs. Wird ein Teilbereich der Länge l erwärmt, so ergibt sich eine Ausbauchung h des Blechs.

Fig. 2 illustriert den Fall eines dickeren Blechs, in dem aufgrund der höheren Dicke / Stärke des Blechs abseits der Nullfaser Stauchungen und Spreizungen auftreten. Beispielsweise hat das in dem Versuchsaufbau von Fig. 1 verwendete Blech eine Stärke / Dicke von 10 mm. In Fig. 2 bezeichnet y die mittlere Phasendeformation bzw. Faserdeformation relativ zur Nullphase bzw. Nullfaser.

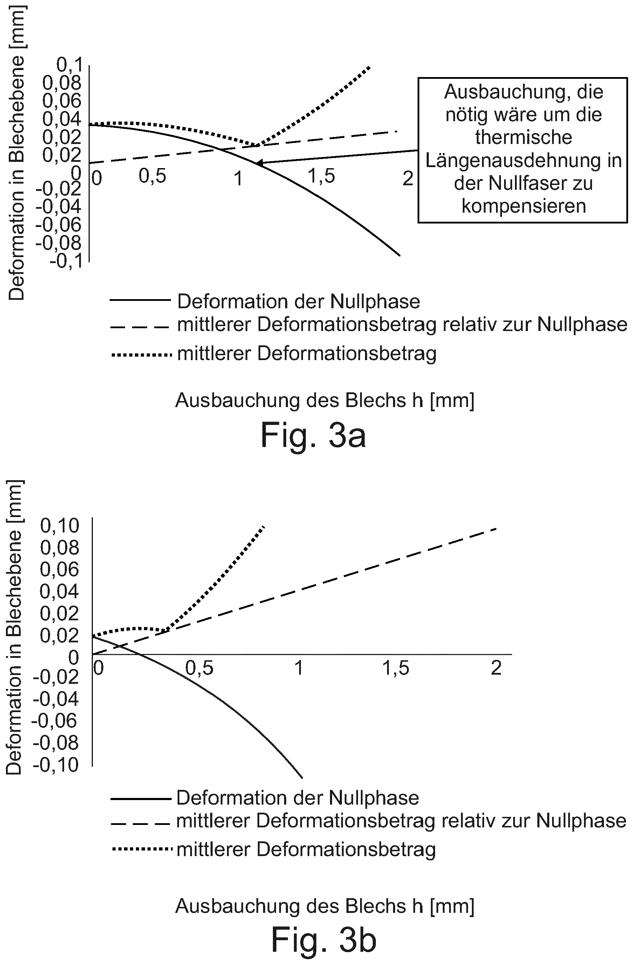

Fig. 3a zeigt einen Versuchsaufbau mit einem Blech mit einer Stärke von 0, 5 mm, wobei der thermische Ausdehnungskoeffizient $1{,}3 * 10^{-5}$ 1/K beträgt, ein Teilbereich von einer Länge von 30 mm des Blechs erwärmt wird und die Temperaturdifferenz zwischen der Schmelztemperatur des Schmelzklebers und der Raumtemperatur 100 K beträgt.

Das Blech baucht sich mit einer Höhe von 1,1 mm (h=1,1 mm) aus. In der Figur 3a ist ersichtlich, dass die Kurve der Deformation der Nullphase (Nullfaser) genau in dem Punkt die x-Achse schneidet, in dem die Ausbauchung h 1,1 mm beträgt. Bei h= 1,1 mm hat die Kurve des mittleren Deformationsbetrags, welche ein Maß für die Stauchungen und Spreizungen innerhalb des Blechs bietet, ein globales Minimum.

Fig. 3b zeigt das Beispiel aus Fig. 3a mit dem einzigen Unterschied, dass ein Teilbereich mit einer Länge von lediglich 10 mm erwärmt wird. Das Blech baucht sich in diesem Fall nicht aus, sondern bleibt gerade.

In der Figur 3b ist ersichtlich, dass die Kurve der Deformation der Nullphase (Nullfaser) genau in dem Punkt die x-Achse schneidet, indem die Ausbauchung h 0, 4 mm beträgt. Bei h= 0,4 mm hat die Kurve des mittleren Deformationsbetrags, welche ein Maß für die Stauchungen und Spreizungen innerhalb des Blechs bietet, ein globales Minimum.

In anderen Worten liegen nur minimale Spannungen / Spreizungen in dem Blech vor und nur eine Ausbauchung von 0,4 mm wäre nötig, um die thermische Längenausdehnung der Nullfaser zu kompensieren. Diese minimalen Spannungen / Spreizungen können jedoch in dem Blech aufgenommen werden, sodass keine Verformung / Ausbauchung des Blechs auftritt, sondern das blech gerade bleibt.

In anderen Worten ausgedrückt kann die vorliegende Erfindung auch wie folgt beschrieben werden: Vakuumdämmkörper mit einer Barrierefolie als gasundurchlässige Hülle sind aus dem Stand der Technik bekannt und in stetig wachsendem Einsatz. Der Einsatz einer Barrierefolie ermöglicht die Gewährleistung einer ausreichenden Dichtigkeit gegenüber eindiffundierenden Gasteilchen ohne dabei eine zu große Wärmebrücke in der Hülle zu verursachen oder gegenüber thermischen oder mechanischen Verspannungen anfällig zu sein.

Eine derartige dünne Barrierefolie ist jedoch empfindlich gegenüber mechanischen Beschädigungen und muss daher im Einsatz geschützt werden, um die Integrität der Folie in der Anwendung sicherzustellen.

Der Vakuumdämmkörper kann in einem Sandwichverbund mechanische Kräfte sehr gut aufnehmen, da die Steifigkeit des druckbelasteten Dämmkörpers üblicherweise ähnlich groß oder größer ist als die Steifigkeit konventioneller Dämmstoffe, insbesondere von Kunststoffschäumen.

Zum Aufbringen von Deckschichten in einem Deckschichtverbund existiert eine Vielzahl an beschriebenen Lösungsmöglichkeiten.

Aus Kosten- und Prozessgründen besonders geeignet ist der in der Druckschrift DE102017114659 beschriebene Ansatz. Dabei wird vorab jeweils auf den Vakuumdämmkörper und die mit diesem zu verbindende Deckschicht ein Schmelzkleber aufgebracht.

Nach einem Positionieren der Deckschicht auf dem Vakuumdämmkörper werden die Deckschicht und der Vakuumkörper durch Wärmeeinwirkung verbunden bzw. versiegelt. Diese Wärmeeinwirkung geschieht gleichzeitig mit Druck auf den Deckschichtverbund, um ein Verschmelzen der Schichten zu gewährleisten.

Das Verbinden der Deckschicht und des Vakuumdämmkörpers über Schmelzkleber wird in der Folge auch als Siegeln bezeichnet.

Die Deckschicht besteht meist aus einem steifen Material bzw. weist ein solches auf. Als steife Deckschicht kommt üblicherweise Blech zum Einsatz.

Ein beispielhafter Anwendungsfall eines solchen Deckschichtverbundes ist die Außenwand eines Kältegeräts oder ein hochdämmendes Fassadenelement.

Beim zum Verschmelzen notwendigen Wärmeeintrag besteht jedoch die grundsätzliche Problematik der thermischen Ausdehnung der Deckschicht.

Wird zum Beispiel ein Schmelzkleber auf Polyethylenbasis eingesetzt, so ist eine Schmelztemperatur nötig, die ca. 100 Grad Celsius über der Raumtemperatur liegt. Der thermische Ausdehnungskoeffizient von Stahl liegt bei $1,3 *10^{-5}$ 1/K, sodass beispielsweise eine zwei Meter lange Wand eines Kältegeräts im erhitzten Zustand fast 3 mm länger als im erkalteten Zustand ist.

Wird beispielsweise beim Siegeln nur ein Teil der Deckschicht erhitzt, so ergeben sich thermische Spannungen im Deckschichtmaterial (Blech, beispielsweise aus Stahl), die zu einer Ausbauchung der Deckschicht führen. Dieser Vorgang ist nur für die Deckschicht betrachtet reversibel.

Wird jedoch der Verbund aus Deckschicht und Vakuumkörper beim Siegeln bereichsweise und unter Druck erhitzt, dann ergeben sich im heißen Zustand starke Kräfte auf den Vakuumkörper, die zu einer plastischen Deformation des Vakuumkörpers und / oder der Deckschicht führen. In einem derartigen Fall weist die Deckschicht nach dem Aufbringen leichte Ausbauchungen / Dellen auf, die zu einer optisch nicht zufriedenstellenden Deckschicht führen.

Der vorliegenden Erfindung liegt somit die Aufgabe zugrunde, eine Möglichkeit der Verbindung durch thermisches Verschmelzen zu schaffen, die nicht zu Verformungen der Deckschicht führt.

Diese Aufgabe wird durch einen Vakuumkörper-Deckschicht-Verbund nach Anspruch 1 sowie das Verfahren nach Anspruch 6 gelöst.

Bei der lokalen Erwärmung eines Blechs, beispielsweise einer Deckschicht, ergibt sich eine Deformation, die beispielhaft in den Figuren 1 und 2 wiedergeben ist. In dem in den Figuren 1 und 2 wiedergegebenen Fall erfolgt eine durchgängige linienförmige Erwärmung einer in einer Testvorrichtung eingespannten Deckschicht.

Die Längenausdehnung eines Blechs im Falle einer Erwärmung des eingespannten Blechs wird durch ein Ausbauchen kompensiert, wobei die dafür nötige Höhe der Ausbauchung bei Annahme eines sehr dünnen Blechs (entspricht im Wesentlichen der Nullfaser) durch die in der Figur 1 ersichtlichen Formeln genähert werden kann.

Bei einem Blech mit höherer Blechstärke (dickeres Blech) führt das Ausbauchen weiterhin zu einem nicht unerheblichen bzw. relevanten Stauchen bzw. Spreizen der abseits der Nullfaser befindlichen Lagen des Blechs, welche durch die in Figur 2 ersichtliche Formel genähert werden können.

Zum Verständnis sind im Beispieldiagramm 3 die aus den obigen Formeln berechnete mittlere Deformation sowie die beiden Bestandteile dieser Deformation in Abhängigkeit der Ausbauchung wiedergegeben. Bei einer guten Näherung gleicher Elastizitätsmodule für Stauchung und Spreizung ist diese Deformation direkt proportional zu einer Verspannungsenergie.

Aus Fig. 3a ist ersichtlich, dass eine leichte Ausbauchung zunächst eine leicht ungünstigere Gesamtdeformation verursacht, dann aber bei steigender Ausbauchung in eine deutlich günstigere Deformation übergeht, und zwar so lange bis der Längengewinn der Nullfaser durch die Ausbauchung die thermische Ausdehnung übersteigt. Die kleine Potentialbarriere wird immer übersprungen, es kommt zur Ausbauchung / Dellenbildung.

Wird die erwärmte Länge reduziert, so verschieben sich die Deformationsgraphen wie in Fig. 3b wiedergegeben und das globale Minimum für die Deformation liegt beim Nullpunkt / Ursprung ohne Ausbauchung.

Bei näherer Betrachtung ergibt sich hieraus, dass eine Ausbauchung immer dann stattfinden wird, wenn die Ausbauchung, welche sich bei einem sehr dünnen Blech aufgrund der temperaturbedingten Längenänderung ergäbe, größer ist als die Blechstärke des zugrunde gelegten Bleches.

Nach der nachstehend wiedergegebenen Herleitung tritt dieser Fall ein, wenn die erwärmte Länge der Blechstärke dividiert durch die Wurzel der halben thermischen Ausdehnung entspricht.

Mathematische Herleitung der Berechnung der Flächenausdehnung

Da die thermische Ausdehnung $\alpha\Delta T$ dem Produkt des Ausdehnungskoeffizienten [1/K] und der Erwärmung [K] entspricht, ergeben sich die folgenden Gleichungen:

Aus dem Zusammenhang thermische Ausdehnung $\alpha\Delta T$ = Ausdehnungskoeffizient [1/K] * Erwärmung [K], ergibt sich unter Berücksichtigung der in Fig. 1 dargestellten Verhältnisse die folgende Gleichung 1

$$\text{Thermische Ausdehnung } \alpha\Delta T \quad = \frac{\sqrt{\left(\frac{l}{2}\right)^2 + h^2}}{\frac{l}{2}} - 1$$

In einem Anwendungsfall wird angenommen, dass die Ausbauchung h eines sehr dünnen Blechs (entspricht im Wesentlichen der Nullfaser) der Dicke / Stärke d des Blechs entspricht, d.h. h = d. Bei einer derartigen Annahme führt eine Umformung der Gleichung 2 zu nachstehender Gleichung 2:

$$\left(\alpha\Delta T + 1\right) * \frac{l}{2} = \sqrt{\left(\frac{l}{2}\right)^2 + d^2}$$

Woraus die nachstehende Gleichung 3 folgt:

$$\left(\left(\alpha\Delta T + 1\right)^2 - 1\right) * \left(\frac{l}{2}\right)^2 = d^2$$

Aus welcher durch Auflösen der binomischen Formel die nachstehende Gleichung 4 hergeleitet werden kann:

$$\left(\left(\alpha\Delta T\right)^2 + 2\alpha\Delta T\right) * \left(\frac{l}{2}\right)^2 = d^2$$

Da der Wert der thermischen Ausdehnung in der Praxis meist sehr klein ist ($\alpha\Delta T \ll 1$) kann der quadratische Term vernachlässigt und Gleichung 4 wie nachstehend als Gleichung 5 wiedergegeben vereinfacht werden:

$$\left(2\alpha\Delta T\right) * \left(\frac{l}{2}\right)^2 = d^2$$

Umformen der Gleichung 5 ergibt die nachstehende Gleichung 6:

$$l = \frac{d}{\sqrt{\dfrac{\alpha \Delta T}{2}}}$$

Gemäß der Gleichung 6 lässt sich die Abmessung / der Durchmesser einer Klebestelle errechnen, die ein ausbuchtungsfreies bzw. ausbauchungsfreies Versiegeln zwischen der Deckschicht und dem Vakuumdämmkörper ermöglicht.

Vorzugsweise ist der mittels der Gleichung 6 errechnete Wert der Maximalwert einer einzelnen Dimension / Abmessung einer einzelnen Klebestelle einer Anzahl / Mehrzahl an Klebestellen, mittels denen die Deckschicht mit dem Vakuumdämmkörper verbunden wird. Vorzugsweise sind die einzelnen Klebestellen im Wesentlichen kreisförmig ausgebildet und bilden Klebepunkte.

In der Praxis hat sich gezeigt, dass in speziellen Fällen, insbesondere bei punktförmigen Klebestellen, bei denen der erwärmte Bereich sehr scharf begrenzt ist, auch eine bzw. mehrere um bis zu 20% größere oder kleinere (relativ zu dem mittels der Gleichung 6 berechneten Wert) Klebestelle(n) ausbauchungsfrei möglich ist.

Grundsätzlich lässt sich prozesstechnisch stabil eine Klebestelle realisieren, die um mindestens 40%, beispielsweise um 50 %, kleiner als der errechnete Wert ist.

Zu kleine Klebestellen führen jedoch zu einem geringen Flächenanteil der Verklebung bzw. machen eine Vielzahl an Klebeprozessschritten notwendig. Außerdem wird bei kleinen Klebestellen die Wärmeableitung im Blech weg von der Klebestelle problematisch.

Beispiele

Im Folgenden werden zur Erläuterung der vorliegenden Erfindung zwei Beispiele wiedergegeben:

Beispiel 1

Bei einem Stahlblech (Ausdehnungskoeffizient $1,3*10^{-5}$ 1/K) mit 0,5 mm Stärke und einer Schmelztemperatur von 100 K über Raumtemperatur ergibt sich nach Gleichung 6 eine maximale Klebestellengröße von 23,5 mm im Durchmesser.

Eine sicher deformationsfreie Verbindung ist für Klebestellen < 11,8 mm (bzw. < 11,75 mm) im Durchmesser möglich.

Beispiel 2

Bei einem Aluminiumblech (Ausdehnungskoeffizient $2,3*10^{-5}$ 1/K) mit 2 mm Stärke und einer Schmelztemperatur 100 K über Raumtemperatur ergibt sich nach Gleichung 6 eine maximale Klebestellengröße von 70,8 mm im Durchmesser.

Eine sicher deformationsfreie Verbindung ist für Klebestellen < 35,4 mm im Durchmesser möglich.

**Patentansprüche**

1. Verbund mit einem Grundkörper und einer vorzugsweise metallischen Deckschicht, welche mittels einer Anzahl von Verbindungsstellen mit dem Grundkörper verbunden ist, **dadurch gekennzeichnet, dass** die Flächenausdehnung einer jeden Verbindungsstelle der Anzahl an Verbindungsstellen zumindest in einer Dimension kleiner ist als das 1,2-fache, insbesondere kleiner als das 0,6-fache, der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur.

2. Verbund nach Anspruch 1, **dadurch gekennzeichnet, dass** die Flächenausdehnung einer jeden Verbindungsstelle kleiner ist als das 0,5-fache der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur.

3. Verbund nach Anspruch 1 oder 2, **dadurch gekennzeichnet, dass** die einzelnen Verbindungsstellen der Anzahl von Verbindungsstellen vorzugsweise ineinander übergehen und / oder einander überlappen und / oder eine flächige, vorzugsweise eine vollflächige, Verbindung zwischen der Deckschicht und dem Grundkörper ausbilden.

4. Verbund nach einem der vorgehenden Ansprüche, **dadurch gekennzeichnet, dass** die Deckschicht aus Stahl und / oder Aluminium oder einem sonstigen Metall gefertigt ist.

5. Verbund nach einem der vorgehenden Ansprüche, **dadurch gekennzeichnet, dass** der Grundkörper ein Vakuumdämmkörper für ein Kühl- und / oder Gefriergerät, einen Warmwasserspeicher, eine Rohrdämmung, eine Dämmung für Industriebau oder eine Dämmung für Kühlhallen ist.

6. Verfahren zum Herstellen eines Verbunds mit einem Grundkörper und einer vorzugsweise metallischen Deckschicht, welche mittels einer Anzahl von Verbindungsstellen mit dem Grundkörper verbunden ist, mit dem Schritt:

   - Ermitteln eines Referenzwerts der Flächenausdehnung einer Dimension einer jeden Verbindungsstelle der Anzahl von Verbindungsstellen, wobei der Referenzwert sich aus der Stärke der Deckschicht geteilt durch die Wurzel der Hälfte des Produkts aus dem thermischen Ausdehnungskoeffizienten der Deckschicht und der Temperaturdifferenz zwischen dem Schmelzpunkt eines die Verbindungstelle bildenden Schmelzklebers und der Raumtemperatur berechnet.

7. Verfahren nach Anspruch 6, weiterhin mit dem Schritt:

   - Aufbringen einer Anzahl von Verbindungsstellen auf dem Grundkörper und/ oder der vorzugsweise metallischen Deckschicht, wobei die Flächenausdehnung einer jeden Verbindungsstelle der Anzahl von Verbindungsstellen zumindest in einer Dimension kleiner ist als das 1,2-fache, insbesondere kleiner als das 0,6-fache des Referenzwerts.

8. Verfahren nach Anspruch 7, **dadurch gekennzeichnet, dass** eine jede Verbindungsstelle der Anzahl von Verbindungsstellen punktförmig und / oder im Wesentlichen rund ausgebildet wird.

9. Verfahren nach Anspruch 8, **dadurch gekennzeichnet, dass** eine jede Verbindungsstelle der Anzahl von Verbindungsstellen in einem derartigen Abstand von einer benachbarten Verbindungsstelle aufgebracht wird, dass mittels eines nachfolgenden Siegelschritts, die einzelnen Verbindungsstellen miteinander verschmolzen werden können.

10. Verfahren nach einem der Ansprüche 6 bis 8, weiterhin mit dem Schritt:

    - Versiegeln der Deckschicht und des Grundkörpers mittels eines einmaligen Siegelvorgangs oder mittels mehrerer Siegelvorgänge, sodass die Verbindungsstellen der Anzahl von Verbindungsstellen miteinander verschmelzen und eine flächige, vorzugsweise eine vollflächige, Verbindung zwischen der Deckschicht und dem Grundkörper gebildet wird.

11. Verfahren nach einem der Ansprüche 6 bis 10, **dadurch gekennzeichnet, dass** die Deckschicht aus einem Metall, vorzugsweise aus Stahl und / oder Aluminium, gefertigt ist und der Grundkörper ein Vakuumdämmkörper für ein Kühl- und / oder Gefriergerät ist.

Wurzel ((I/20^2+h^2)

h

I/2

I= Länge des erwärmten Bereichs
h= Ausbauchung des Blechs

# Fig. 1

y    y/h=d/l

d= Blechstärke

y= mittlere Phasendeformation relativ zur Nullfaser

# Fig. 2

Ausbauchung, die nötig wäre um die thermische Längenausdehnung in der Nullfaser zu kompensieren

Deformation in Blechebene [mm]

——————— Deformation der Nullphase
— — — mittlerer Deformationsbetrag relativ zur Nullphase
············ mittlerer Deformationsbetrag

Ausbauchung des Blechs h [mm]

## Fig. 3a

Deformation in Blechebene [mm]

——————— Deformation der Nullphase
— — — mittlerer Deformationsbetrag relativ zur Nullphase
············ mittlerer Deformationsbetrag

Ausbauchung des Blechs h [mm]

## Fig. 3b

Europäisches
Patentamt

European
Patent Office

Office européen
des brevets

**EUROPÄISCHER RECHERCHENBERICHT**

Nummer der Anmeldung

EP 20 16 5576

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2017 114659 A1 (LIEBHERR HAUSGERAETE LIENZ GMBH [AT]) 26. Juli 2018 (2018-07-26) | 1-5 | INV. F25D23/06 F16L59/065 |
| A | * das ganze Dokument * | 6-11 | B32B7/05 C09J5/06 |
| | ----- | | |
| X | WO 2008/028742 A1 (TESA AG [DE]; HUSEMANN MARC [DE]; KLOSE MAREN [DE]) 13. März 2008 (2008-03-13) * Abbildungen 1,2,4 * | 1-11 | |
| | ----- | | |
| X | DE 35 27 061 A1 (PIRKL LUDWIG) 19. Februar 1987 (1987-02-19) * Abbildungen 1,2 * | 1 | |
| | ----- | | |
| A | DE 10 2008 062149 B3 (OVD KINEGRAM AG [CH]) 29. April 2010 (2010-04-29) * das ganze Dokument * | 1,6 | |
| | ----- | | |
| A | JP H04 160298 A (SHARP KK) 3. Juni 1992 (1992-06-03) * das ganze Dokument * | 1,6 | |
| | ----- | | RECHERCHIERTE SACHGEBIETE (IPC) |
| A | EP 3 421 210 A1 (BOEING CO [US]) 2. Januar 2019 (2019-01-02) * das ganze Dokument * | 1,6 | F25D F16L B32B C08J C09J |
| | ----- | | |

Der vorliegende Recherchenbericht wurde für alle Patentansprüche erstellt

| Recherchenort | Abschlußdatum der Recherche | Prüfer |
|---|---|---|
| Den Haag | 5. August 2020 | de Graaf, Jan Douwe |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 5576

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-08-2020

| Im Recherchenbericht angeführtes Patentdokument | Datum der Veröffentlichung | Mitglied(er) der Patentfamilie | Datum der Veröffentlichung |
|---|---|---|---|
| DE 102017114659 A1 | 26-07-2018 | CN 110177985 A<br>DE 102017114659 A1<br>EP 3529545 A1<br>US 2020030923 A1<br>WO 2018134440 A1 | 27-08-2019<br>26-07-2018<br>28-08-2019<br>30-01-2020<br>26-07-2018 |
| WO 2008028742 A1 | 13-03-2008 | DE 102006042816 A1<br>DE 112007002048 A5<br>US 2009311473 A1<br>WO 2008028742 A1 | 26-06-2008<br>25-06-2009<br>17-12-2009<br>13-03-2008 |
| DE 3527061 A1 | 19-02-1987 | KEINE | |
| DE 102008062149 B3 | 29-04-2010 | BR PI0922926 A2<br>CA 2745913 A1<br>CN 102245394 A<br>DE 102008062149 B3<br>EP 2373492 A2<br>ES 2538466 T3<br>HU E026443 T2<br>JP 5639075 B2<br>JP 2012512059 A<br>PL 2373492 T3<br>RU 2011129653 A<br>TW 201024113 A<br>WO 2010072339 A2 | 26-01-2016<br>01-07-2010<br>16-11-2011<br>29-04-2010<br>12-10-2011<br>22-06-2015<br>28-06-2016<br>10-12-2014<br>31-05-2012<br>31-08-2015<br>27-01-2013<br>01-07-2010<br>01-07-2010 |
| JP H04160298 A | 03-06-1992 | JP 2892484 B2<br>JP H04160298 A | 17-05-1999<br>03-06-1992 |
| EP 3421210 A1 | 02-01-2019 | CN 109219177 A<br>EP 3421210 A1<br>JP 2019010864 A<br>US 2019001581 A1 | 15-01-2019<br>02-01-2019<br>24-01-2019<br>03-01-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017114659